# EUROPEAN PATENT SPECIFICATION

(11) **EP 2 930 098 B1**
(45) Date of publication and mention of the grant of the patent: **17.06.2020**
(21) Application number: 13860109.1
(22) Date of filing: 24.09.2013
(51) Int. Cl.: B63B 1/38, F04B 39/16

(54) **AIR LUBRICATION DEVICE AND SHIP**
LUFTSCHMIERUNGSVORRICHTUNG UND SCHIFF
DISPOSITIF DE LUBRIFICATION À AIR ET NAVIRE

(30) Priority: 07.12.2012 JP 2012268830
(43) Date of publication of application: 14.10.2015
(73) Proprietor: Oshima Shipbuilding Co. Ltd., Nagasaki 857-2494 (JP)
(72) Inventor: TANAKA Kenichi, Saikai-shi Nagasaki 857-2494 (JP); WATANABE Katsunori, Tokyo 100-0005 (JP); INOUE Tomoki, Tokyo 100-0005 (JP)
(74) Representative: Epping - Hermann - Fischer
(86) International application number: PCT/JP2013/075748
(87) International publication number: WO 2014/087715

(56) References cited:
- JP-A- H11 348 870
- JP-A- 2010 023 631
- JP-A- 2013 091 376

## Description

### Technical Field

The present disclosure relates to an air lubrication device that is installed on a ship, releasing air from the bottom of the ship, so as to reduce the frictional resistance by the water acting on the bottom of the ship; and to a ship equipped with the air lubrication device.

### Background Art

Most of the resistance acting on a sailing ship by water, particularly on a large ship, is the frictional resistance caused by the relative motion between the water and the bottom of the ship. Therefore, reducing the frictional resistance by air lubrication, in which air is released from the bottom of a ship to generate air bubbles, which are travelling along the bottom of the ship, is greatly effective at reducing the fuel consumption of the ship and at reducing carbon dioxide emissions. A lot of disclosures relating to devices for reducing frictional resistance by air lubrication and to ships equipped with the devices have been already filed (for example, Patent Literatures 1 and 2).

Document JP H11 348870 A discloses an air supplying device for generating micro bubbles from a supercharger of a main engine for decreasing hull resistance of a ship. Therefore, a branch line is installed on a pressurized air line supplying pressurized air to a main engine from a blower. Furthermore, a supercharger is installed on the main engine which supplies pressurized air to deliver bubbles through the branch line.

An air lubrication device in which the main engine of a ship is used as an air source is also known. For example, Patent Literature 3 discloses a ship equipped with: a main engine; and a supercharger that is driven by exhaust gas from the main engine and supplies compressed air to the main engine, wherein part of the compressed air supplied by the supercharger and part of the exhaust gas from the main engine are extracted and supplied to an air lubrication device. In addition, in the device of Patent Literature 3, the compressed air is extracted from a scavenging air receiver just in front of the main engine, and a position between a compressor and an intercooler.

### Citation List

### Patent Literature

Patent Literature 1: Unexamined Japanese Patent application Kokai Publication No. H10-175588
Patent Literature 2: Unexamined Japanese Patent Application Kokai Publication No. HI 1-222180
Patent Literature 3: Unexamined Japanese Patent Application Kokai Publication No. 2010-23631

### Summary of Invention

### Technical Problem

According to the disclosure of Patent Literature 2, it is not necessary to separately prepare a power for generating high-pressure air spouted from an air lubrication device, and therefore, a high energy-saving effect is achieved. However, since compressed air in a scavenging air receiver can possibly contain gas or mist flowing backward from a main engine, there is a risk that the sea is polluted by a substance contained in the gas/mist when releasing compressed air extracted from the scavenging air receiver, into the sea. Although there is a lower risk that the gas or mist from the main engine will be contained if compressed air is extracted from the position between a compressor and an intercooler, compressed air discharged from the compressor is at a temperature as high as around 200°C before passing through the intercooler. The transportation of such high-temperature air through a pipe results in damage to the coating of the pipe and also in the risk of fire or a burn. In addition, there is a problem that condensed water is generated in the pipe and adversely affects an instrument or meter in the pipe.

The present disclosure is achieved under such a background. An objective of the present disclosure is to provide an air lubrication device in which a supercharger in a main engine is used as an air source and by which clean air without mixture of exhaust gas can be released to the bottom of a ship. An additional objective of the present disclosure is to provide a ship including such an air lubrication device.

### Solution to Problem

In order to achieve the above-described objectives, an air lubrication device proposed by the present disclosure extracts compressed air from a supercharger and releases the compressed air out to a ship hull to generate air bubbles, the supercharger including: an intercooler for cooling compressed air coming from a compressor; a mist catcher for separating moisture from compressed air passing through the intercooler; and a scavenging air receiver temporarily reserving compressed air that has passed through the mist catcher , wherein the compressed air is extracted from an intermediate flow path between the intercooler and the mist catcher and is released to the outer surface of the ship to generate air bubbles.

Drain removal device for removing moisture from compressed air may be included in a way of a compressed air supply line from the supercharger to air openings on the ship hull.

Pressurization device for further pressurizing compressed air supplied from the supercharger and supplying the compressed air to the air openings may be included, wherein the drain removal device may be placed between the supercharger and the pressurization device.

The drain removal device may include: a rising pipe; a drain reservoir formed below the rising pipe; and a drain trap for discharging drain from the drain reservoir.

A plurality of the drain removal device may be placed in series.

A ship according to the present disclosure includes the air lubrication device described in any one of the above.

### Advantageous Effects of Invention

In accordance with the present disclosure, compressed air is extracted from an intermediate flow path between an intercooler and a mist catcher in a supercharger to eliminate the possibility of mixing exhaust gas into the compressed air, so that marine pollution can be prevented. When drain removal device is included in a line from the supercharger to an air lubrication device, a risk that moisture in compressed air condenses to clog a line can be eliminated, and therefore, the reliability of the air lubrication device is improved.

### Brief Description of Drawings

FIG. 1 is a conceptual configuration diagram of a ship equipped with an air lubrication device;
FIG. 2 is a conceptual configuration diagram illustrating the configuration of a supercharger;
FIG. 3 is a conceptual configuration diagram illustrating the configuration of a line; and
FIG. 4 is an explanatory drawing illustrating the action of drain removal device.

### Description of Embodiments

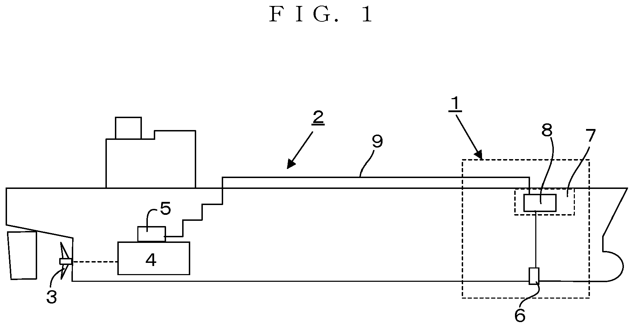

FIG. 1 is a conceptual configuration diagram of a ship 2 equipped with an air lubrication device 1 according to the present disclosure. As illustrated in FIG. 1, the ship 2 is equipped with a main engine 4 for driving a propeller 3, and the main engine 4 comprises a supercharger 5. The main engine 4 is a two-cycle low-speed diesel engine, and the supercharger 5 is a turbocharger in which a turbine is driven by exhaust gas from the main engine 4 and in turn drives a compressor to compress atmospheric air to generate high-pressure compressed air.

The air lubrication device 1 comprises: a plurality of air openings 6 on the ship bottom, closer to the bow, of the ship 2; a blower 8 placed in a blower room 7 above the air openings 6; and a line 9 through which part of combustion air is extracted from the supercharger 5 and supplied to the air openings 6 via the blower 8. The combustion air extracted from the supercharger 5 is pressurized by the blower 8 and spouted through the air openings 6 to generate bubbles on the outer surface of the bottom of the ship 2. In other words, in the present embodiment, the supercharger 5 functions as an air source for supplying air to generate air bubbles for the air lubrication device 1.

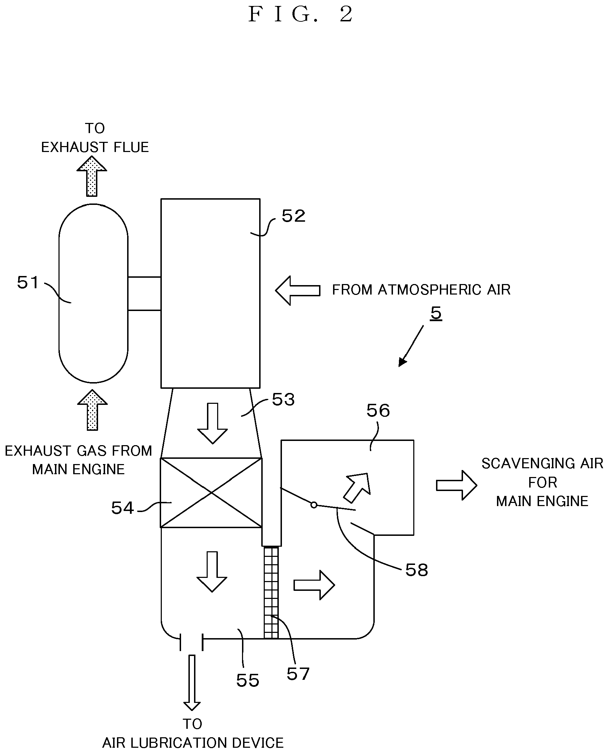

As illustrated in FIG. 2, the supercharger 5 comprises a turbine 51 and a compressor 52. The turbine 51 is driven by exhaust gas from the main engine 4, and the compressor 52 is driven by the turbine 51. Atmospheric air is introduced into the compressor 52, compressed to have a high pressure by the compressor 52, and then sent to an upper trunk 53. An intercooler 54, which is below the upper trunk 53, cools air subjected to adiabatic compression and allowed to be at high temperature by the compressor 52. Air passed through the intercooler 54 is sent to a lower trunk 55 and further sent to a scavenging air receiver 56. The scavenging air receiver 56 is connected to each of cylinders, which is not illustrated, of the main engine 4, and high-pressure air sent to the scavenging air receiver 56 scavenges each of the cylinders.

In addition, a mist catcher 57 is placed in the lower trunk 55, and a flap 58 is placed between the lower trunk 55 and the scavenging air receiver 56. The mist catcher 57 is a device for supplementing moisture floating in mist form in air passing through the lower trunk 55, the device comprising, for example, a lot of louvre-shaped baffle plates. The flap 58 is a lid for preventing backward flow from the scavenging air receiver 56 to the lower trunk 55, is hinged on a partition plate between the scavenging air receiver 56 and the lower trunk 55, is opened by being pressurized in a direction from the lower trunk 55 to the scavenging air receiver 56, and is closed by being pressurized in the reverse direction.

The supercharger 5 is configured as described above, and the line 9 is connected to the lower trunk 55 upstream of the mist catcher 57. In other words, high-pressure air compressed by the compressor 52 is extracted between the intercooler 54 and the mist catcher 57 and supplied to the air lubrication device 1. The flap 58 and the mist catcher 57 are present between the position of the extraction and the scavenging air receiver 56. Therefore, even when gas or mist flows backward from the main engine 4 to the scavenging air receiver 56, a pollutant in the gas/mist is blocked by the flap 58 and the mist catcher 57. Therefore, pollution due to air supplied to the air openings 6 of the air lubrication device 1 through the line 9 can be effectively prevented.

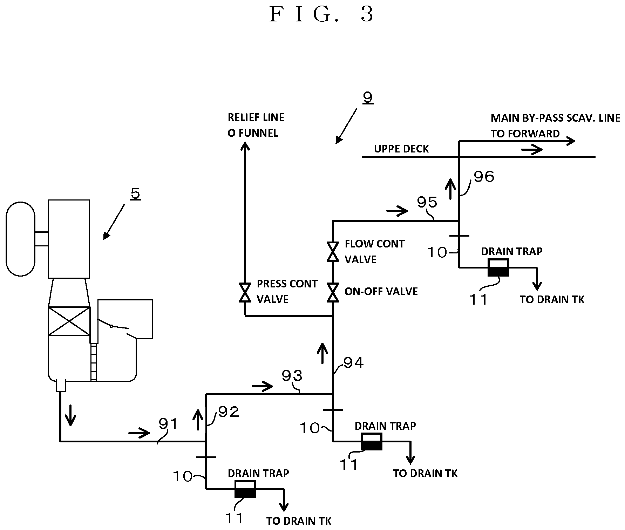

In addition, the line 9 is configured as illustrated in FIG. 3. In other words, the line 9 comprises a first horizontal pipe 91, a first rising pipe 92, a second horizontal pipe 93, a second rising pipe 94, a third horizontal pipe 95, and a third rising pipe 96 from the supercharger 5 toward the air lubrication device 1. In addition, drain reservoirs 10 are included below the first to third rising pipes 92, 94, and 96, and drain traps 11 are connected to the drain reservoirs 10.

Since the line 9 is connected to the lower trunk 55 upstream of the mist catcher 57, air flowing from the supercharger 5 into the line 9 contains an appreciable amount of moisture in mist. Therefore, drain accumulates in the line 9 to obstruct the flow of air when left unattended. Thus, the three sets of the drain reservoirs 10 and the drain traps 11 are placed to remove the drain as mentioned above. In other words, a set of a drain reservoir 10 and a drain trap 11 functions as drain removal device.

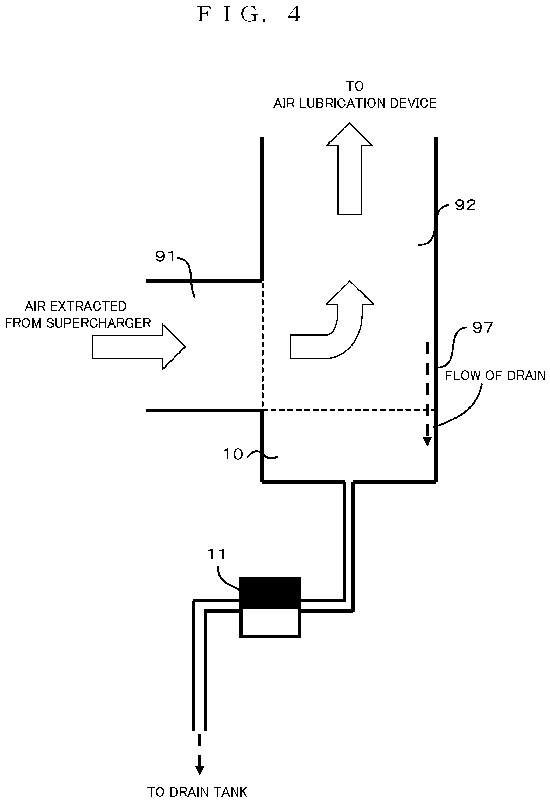

The action of the set of the drain reservoir 10 and the drain trap 11, that is, the drain removal device is explained with reference to FIG. 4. As illustrated in FIG. 4, air flowing from the first horizontal pipe 91 into the first rising pipe 92 hits an inner wall 97 of the first rising pipe 92, and mist contained in the air adheres to the inner wall 97. The mist adhering to the inner wall 97 becomes drain, which flows down on the inner wall 97 and accumulates in the drain reservoir 10. When the water level of the drain accumulating in the drain reservoir 10 exceeds a predetermined level, the drain trap 11 is actuated to discharge the drain. The discharged drain is sent to a drain tank which is not illustrated.

In such a manner, air spouting from the first horizontal pipe 91 is allowed to hit the inner wall 97, and therefore, mist can be efficiently supplemented to generate drain. The bottom of the drain reservoir 10 may also be inclined so that drain easily flows toward the drain trap 11.

The drain trap 11 is, for example, a known device comprising a valve opened and closed by a lever with a float, operating according to the variation of the water level of drain, wherein the valve is opened when the water level of the drain exceeds a predetermined level, and the valve is closed when the water level returns to the level. Since the flow path of air is always water-sealed with the drain in the drain trap 11, high-pressure air passed through the line 9 does not leak from the drain trap 11.

As explained above, in accordance with the present disclosure, compressed air is extracted in the intermediate flow path between the intercooler and mist catcher of the supercharger, and therefore, air passed through the air lubrication device is not polluted with gas or mist flowing backward from the main engine through the scavenging air receiver. Therefore, the air lubrication device without the risk of marine pollution can be provided.

The foregoing describes some example embodiments for explanatory purposes. The technical scope of the invention is not limited to the above-described embodiments. Persons skilled in the art will recognize that applications, changes, and modifications may be made in form and detail without departing from the technical idea described in the included claims.

For example, the blower is not an essential component in the air lubrication device of the present disclosure. The air lubrication device can be configured without the blower. Alternatively, the supercharger and the blower can be placed in parallel as the independent air sources of the air lubrication device. In other words, a configuration can be made such that air coming from the supercharger is spouted from some air openings whereas air coming from the blower is spouted from the other air openings.

It will be appreciated that the configuration and arrangement of the line illustrated in FIG. 3 are described for explanatory purposes. The number of sets of the drain removal device is not limited to three. The number can be appropriately increased or decreased as needed. The drain removal device is not limited to the combination of the drain reservoir and the drain trap. For example, a cock that is manually operated may be disposed instead of the drain trap, and drain accumulating in the drain reservoir may be discharged as needed. Alternatively, the drain reservoir may be equipped with a water-level indicator and a motor-operated valve, and the motor-operated valve may be opened when a water level in the drain reservoir exceeds a predetermined level.

The present application claims priority based on Japanese Patent Application No. 2012-268830 including the specification, claims, drawings, and abstract, filed on December 7, 2012. The disclosure of the original patent application is incorporated herein by reference in its entirety.

### Industrial Applicability

The present disclosure is useful in: an air lubrication device installed on a ship; and a ship.

### Reference Signs List

- 1: Air lubrication device
- 2: Ship
- 3: Propeller
- 4: Main engine
- 5: Supercharger
- 6: Air opening
- 7: Blower room
- 8: Blower
- 9: Line
- 10: Drain reservoir
- 11: Drain trap
- 51: Turbine
- 52: Compressor
- 53: Upper trunk
- 54: Intercooler
- 55: Lower trunk
- 56: Scavenging air receiver
- 57: Mist catcher
- 58: Flap
- 91: First horizontal pipe
- 92: First rising pipe
- 93: Second horizontal pipe
- 94: Second rising pipe
- 95: Third horizontal pipe
- 96: Third rising pipe
- 97: Inner wall

## Claims

1. An air lubrication device (1) that extracts compressed air from a supercharger (5) and spouts the compressed air to an outer surface of a ship (2) hull to generate air bubbles, the air lubrication device comprising the supercharger (5), the supercharger (5) comprising: an intercooler (54) for cooling compressed air sent from a compressor (52); a mist catcher (57) for separating moisture from compressed air passing through the intercooler (54); and a scavenging air receiver (56) temporarily reserving compressed air that has passed through the mist catcher (57), **characterised in that** the compressed air is extracted from only an intermediate flow path between the intercooler (54) and the mist catcher (57) and is spouted to the outer surface of the ship (2) hull to generate the bubbles.

2. The air lubrication device (1) according to Claim 1, comprising:
drain removal device for removing drain from compressed air in a way of a compressed air supply line from the supercharger (5) to air openings (6) formed on the outer surface of the ship (2) hull.

3. The air lubrication device (1) according to Claim 2, further comprising:
pressurization device for further pressurizing compressed air supplied from the supercharger (5) and supplying the compressed air to air openings (6),
wherein the drain removal device is placed between the supercharger (5) and the pressurization device.

4. The air lubrication device (1) according to Claim 2, wherein
the drain removal device comprises: a rising pipe (92, 94, 96); a drain reservoir (10) formed below the rising pipe (92, 94, 96); and a drain trap (11) for discharging drain from the drain reservoir (10).

5. The air lubrication device (1) according to Claim 2, wherein
a plurality of the drain removal devices are placed in series.

6. A ship (2) equipped with the air lubrication device (1) according to any one of Claim 1 to Claim 5.

## Patentansprüche

1. Luftschmiervorrichtung (1), die Druckluft aus einem Lader (5) abzieht und die Druckluft zu einer Außenfläche einer Hülle eines Schiffes (2) ausstößt, um Luftblasen zu erzeugen, wobei die Luftschmiervorrichtung den Lader (5) umfasst, wobei der Lader (5) umfasst: einen Ladeluftkühler (54) zum Kühlen der von einem Verdichter (52) geschickten Druckluft; einen Tropfenabscheider (57) zum Abscheiden von Feuchtigkeit aus der durch den Ladeluftkühler (54) strömenden Druckluft; und einen Spülluftempfänger (56), der Druckluft vorübergehend aufbewahrt, die den Tropfenabscheider (57) durchströmt hat,
**dadurch gekennzeichnet, dass**
die Druckluft nur aus einem Zwischen-Strömungspfad zwischen dem Ladeluftkühler (54) und dem Tropfenabscheider (57) abgezogen wird und zur Außenfläche der Hülle des Schiffes (2) ausgestoßen wird, um die Blasen zu erzeugen.

2. Luftschmiervorrichtung (1) nach Anspruch 1, umfassend:
eine Abwasserabfuhrvorrichtung zum Entfernen von Abwasser aus der Druckluft im Zuge einer Druckluftzufuhrleitung vom Lader (5) zu Luftöffnungen (6), die auf der Außenfläche der Hülle des Schiffes (2) ausgebildet sind.

3. Luftschmiervorrichtung (1) nach Anspruch 2, weiter umfassend:
eine Druckregelungsvorrichtung zur weiteren Druckregelung der vom Lader (5) zugeführten Druckluft und zum Zuführen der Druckluft zu den Luftöffnungen (6),
wobei die Abwasserabfuhrvorrichtung zwischen den Lader (5) und die Druckregelungsvorrichtung gesetzt ist.

4. Luftschmiervorrichtung (1) nach Anspruch 2, wobei
die Abwasserabfuhrvorrichtung umfasst: ein Steigrohr (92, 94, 96); einen Abwasserbehälter (10), ausgebildet unter dem Steigrohr (92, 94, 96); und einen Siphon (11) zum Abführen von Abwasser aus dem Abwasserbehälter (10).

5. Luftschmiervorrichtung (1) nach Anspruch 2, wobei
eine Vielzahl von Abwasserabfuhrvorrichtungen in Reihe geschaltet ist.

6. Schiff (2), ausgestattet mit der Luftschmiervorrichtung (1) nach einem beliebigen der Ansprüche 1 bis 5.

## Revendications

1. Dispositif de lubrification à l'air (1) qui extrait de l'air comprimé depuis un compresseur de suralimentation (5) et projette l'air comprimé sur une surface extérieure de la coque d'un navire (2) pour générer des bulles d'air, le dispositif de lubrification à l'air comprenant le compresseur de suralimentation (5), le compresseur de suralimentation (5) comprenant : un refroidisseur intermédiaire (54) pour refroidir de l'air comprimé envoyé depuis un compresseur (52) ; un collecteur de brouillard (57) pour séparer l'humidité de l'air comprimé passant à travers le refroidisseur intermédiaire (54) ; et un récepteur d'air de balayage (56) réservant temporairement l'air comprimé qui a circuler à travers le collecteur de brouillard (57),
**caractérisé en ce que**
l'air comprimé est extrait uniquement depuis un chemin d'écoulement intermédiaire entre le compresseur de suralimentation (54) et le collecteur de brouillard (57) et est projeté sur la surface extérieure de la coque du navire (2) pour générer les bulles.

2. Dispositif de lubrification à l'air (1) selon la revendication 1, comprenant :
un dispositif d'évacuation de drain pour supprimer le drain de l'air comprimé dans le cheminement d'une conduite d'alimentation en air comprimé allant du compresseur de suralimentation (5) à des ouvertures d'air (6) formées sur la surface extérieure de la coque du navire (2).

3. Dispositif de lubrification à l'air (1) selon la revendication 2, comportant en outre :
un dispositif de pressurisation pour pressuriser davantage l'air comprimé fourni par le compresseur de suralimentation (5) et fournir l'air comprimé à des ouvertures d'air (6),
dans lequel le dispositif d'évacuation de drain est placé entre le compresseur de suralimentation (5) et le dispositif de pressurisation.

4. Dispositif de lubrification à l'air (1) selon la revendication 2, dans lequel
le dispositif d'évacuation de drain comprend : un tuyau montant (92, 94, 96) ; un réservoir (10) de drain formé sous le tuyau montant (92, 94, 96) ; et un siphon (11) pour évacuer le drain à partir du réservoir (10) de drain.

5. Dispositif de lubrification à l'air (1) selon la revendication 2, dans lequel
une pluralité de dispositifs d'évacuation de drain sont placés en série.

6. Navire (2) équipé du dispositif de lubrification à l'air (1) selon l'une quelconque des revendications 1 à 5.
